# EUROPEAN PATENT SPECIFICATION

(11) **EP 3 503 601 B1**
(45) Date of publication and mention of the grant of the patent: **05.02.2020**
(21) Application number: 17210081.0
(22) Date of filing: 22.12.2017
(51) Int. Cl.: H04W 8/02, H04W 8/06, H04W 8/12

(54) **TECHNIQUES FOR INITIATING A ROAMING COMMUNICATION LINK WITH A USER EQUIPMENT IN A VISITED COMMUNICATION NETWORK**
TECHNIKEN ZUR INITIIERUNG EINER ROAMING-KOMMUNIKATIONSVERBINDUNG MIT EINEM BENUTZERGERÄT IN EINEM BESUCHTEN KOMMUNIKATIONSNETZWERK
TECHNIQUES POUR INITIER UNE LIAISON DE COMMUNICATION D'ITINÉRANCE AVEC UN ÉQUIPEMENT UTILISATEUR DANS UN RÉSEAU DE COMMUNICATION VISITÉ

(43) Date of publication of application: 26.06.2019
(73) Proprietor: Deutsche Telekom AG, 53113 Bonn (DE)
(72) Inventor: Lauster, Reinhard, 3100 St. Pölten (AT)
(74) Representative: Vossius & Partner Patentanwälte Rechtsanwälte mbB

(56) References cited:
- WO-A1-2013/124334
- SHIN MYUNG-KI ET AL: "A way forward for accommodating NFV in 3GPP 5G systems", 2017 INTERNATIONAL CONFERENCE ON INFORMATION AND COMMUNICATION TECHNOLOGY CONVERGENCE (ICTC), IEEE, 18 October 2017 (2017-10-18), pages 114-116, XP033268393, DOI: 10.1109/ICTC.2017.8190953 [retrieved on 2017-12-12]
- "3rd Generation Partnership Project; Technical Specification Group Services and System Aspects; Procedures for the 5G System; Stage 2 (Release 15)", 3GPP DRAFT; 23502-200, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 15 December 2017 (2017-12-15), XP051379274, Retrieved from the Internet: URL:http://www.3gpp.org/tsg_sa/WG2_Arch/La test_SA2_Specs/Latest_draft_S2_Specs/23502 -200.doc [retrieved on 2017-12-15]
- "3rd Generation Partnership Project; Technical Specification Group Services and System Aspects; System Architecture for the 5G System; Stage 2 (Release 15)", 3GPP DRAFT; 23501-201, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 15 December 2017 (2017-12-15), XP051379271, Retrieved from the Internet: URL:http://www.3gpp.org/tsg_sa/WG2_Arch/La test_SA2_Specs/Latest_draft_S2_Specs/23501 -201.doc [retrieved on 2017-12-15]
- "3rd Generation Partnership Project; Technical Specification Group Core Network and Terminals; 5G System - Phase 1; CT WG4 Aspects (Release 15)", 3GPP STANDARD ; TECHNICAL REPORT ; 3GPP TR 29.891, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V1.0.0, 4 September 2017 (2017-09-04), pages 1-132, XP051336828, [retrieved on 2017-09-04]

## Description

### TECHNICAL FIELD

The invention relates to techniques for initiating a roaming communication link with a user equipment (UE) in a visited communication network (240), in particular in a network slice of the visited communication network. In particular, the invention relates to a method for initiating the communication link by a network entity of the visited communication network via a communication link with a network entity of the home communication network, in particular a roaming shared data layer (RSDL). The invention further relates to a corresponding network entity such as a RAN entity or an AMF entity.

### BACKGROUND

Operators worldwide are currently preparing for the transition to 5G networks. To support the wide range of services planned for 5G, a new core network known as Next-Generation Core or NG Core is planned. Its structure is described, for example, in the technical specification TS 23.501 (V1.5.0) and TS 23.502 (V2.0.0) of 3GPP. It specifies requirements for designing and operating a 5G service-oriented core network.

WO 2013/124334 A1 discloses how a roaming terminal is validated against asubscription data, e.g. a profile, stored locally at the visited network in a UDR data base which is itself a synchronized replica of the UDR DB hosted at the home network.

The paper "A way forward for accommodating NFV in 3GPP 5G systems", from SHIN MYUNG-KI ET AL, published on 18-10-2017 at the 2017 IEEE INTERNATIONAL CONFERENCE ON INFORMATION AND COMMUNICATION TECHNOLOGY CONVERGENCE (ICTC), discloses that AMF and SMF are virtual instances which could be instantiated on different slices, in particular for roaming and in particular on geographically-distributed slices.

The service-oriented 5G core network is based on the premise that 5G shall support very different services with very different performance requirements. Three different service categories for 5G are identified: 1) Enhanced Mobile Broadband (eMBB), 2) Massive machine-type communication (mMTC, also known as loT, Internet of Things) and 3) Ultra-Low Latency (UR-LLC) communication.

This includes use cases or application scenarios such as industrial control, augmented reality (AR) or augmented reality / virtual reality (VR) and networked cars. The goal is to use end-to-end network slices to map and support these diverse services and technologies on a physical network infrastructure. In this way, operators can operate new services in foreign network sectors and insert their networks into new industrial value chains.

When starting operation of the communication terminal, i.e. the mobile terminal, the machine terminal such as of the self-driven car or drone, also denoted herein as user equipment (UE), currently a complex procedure is necessary when the UE is located in the visited network or in an external communication network. This procedure is necessary in order to fetch the subscriber-specific data of the UE from the home communication network, also denoted as home PLMN (Public Land Mobile Network) and to inform the UE. These subscriber-specific data of the UE can for example include registration data of the UE, such as identification and telephone number, e.g. IMSI (International Mobile Subscriber Identity) or IMEI (International Mobile Equipment Identity) or SIM ID (Subscriber Identity Module Identity). Further, for logging into the visited network, also referred to as visited PLMN, capabilities of the visited PLMN, e.g. network technology, support for certain services, etc. are required.

### SUMMARY OF THE INVENTION

It is the object of the present invention to provide a concept to solve the above-mentioned problems, in particular to speed up, simplify and increase security of the connection procedure of the UE in the visited PLMN, and thus to increase the performance and flexibility of communication, especially when roaming in the above described 5G communication networks.

A further object of the present invention is to introduce a new system architecture for simplifying the 5G roaming architecture.

The foregoing and other objects are achieved by the subject matter of the independent claims. Further implementation forms are apparent from the dependent claims, the description and the figures.

The methods and systems presented below may be of various types. The individual elements described may be realized by hardware or software components, for example electronic components that can be manufactured by various technologies and include, for example, semiconductor chips, ASICs, microprocessors, digital signal processors, integrated electrical circuits, electro-optical circuits and/or passive components.

The devices, systems and methods presented below are capable of transmitting information over a communication network. The term communication network or communication network refers to the technical infrastructure on which the transmission of signals takes place. The communication network essentially comprises the switching network in which the transmission and switching of the signals takes place between the stationary devices and platforms of the mobile radio network or fixed network, and the access network in which the transmission of the signals takes place between a network access device and the communication terminal. The communication network can comprise both components of a mobile radio network as well as components of a fixed network. In the mobile network, the access network is also referred to as an air interface and includes, for example, a base station (NodeB, eNodeB, radio cell) with mobile antenna to establish the communication to a communication terminal as described above, for example, a mobile phone or a mobile device with mobile adapter or a machine terminal. In the fixed network, the access network includes, for example, a DSLAM (digital subscriber line access multiplexer) to connect the communication terminals of multiple participants based on wires. Via the switching network the communication can be transferred to other networks, for example other network operators, e.g. foreign networks.

The communication networks presented below may include various technologies and network standards, for example according to the 5G system architecture. This includes the concept of network slicing. Network slicing is a form of virtual network architecture that uses the same principles as software-defined networking (SDN) and network functions virtualization (NFV) in fixed networks. SDN and NFV are used to provide greater network flexibility by partitioning traditional network architectures into virtual elements that can be linked together, even through software.

Network slicing allows multiple virtual networks to be created on a common physical infrastructure. The virtual networks are then adapted to the specific needs of applications, services, devices, customers or operators.

Each virtual network (network slice) comprises an independent set of logical network functions that support the needs of the particular use case, where the term "logical" refers to software.

Each of these virtual networks or network slices is optimized to provide the resources and network topology for the particular service and traffic using the corresponding segment. Features such as speed, capacity, connectivity, and coverage are assigned to meet the specific needs of each use case, but functional components can also be shared across different network slices.

Each network slice can be completely isolated, so that no network slice can disturb the traffic in another network slice. This reduces the risk of introducing and operating new services and also supports migration as new technologies or architectures can be started on isolated slices. It also affects security, because if a cyber-attack breaks a slice, the attack is contained and cannot spread beyond that slice.

Each network slice is configured with its own network architecture, engineering mechanism, and network deployment. To do this, each network slice can receive management capabilities that can be controlled by the network operator or the customer depending on the application. The network slices can be independently managed and orchestrated.

According to a first aspect the invention relates to a method for initiating a roaming communication link with a user equipment (UE) in a visited communication network, in particular in a network slice of the visited communication network, the method comprising: transmitting a registration request by the UE to a network entity of the visited communication network, wherein the registration request comprises an identity (UE ID) of the user equipment; detecting by the network entity of the visited communication network, based on the UE ID, that the registration request is related to a roaming communication with the UE; determining by the network entity of the visited communication network a home communication network of the UE; establishing by the network entity of the visited communication network a communication link to a network entity of the home communication network; and initiating the roaming communication link with the UE via the network entity of the home communication network.

When establishing a communication link from the visited communication network to a network entity of the home communication network, the UE's connection procedure in the visited PLMN can be speeded up since the UE can obtain all relevant data to establish a roaming communication over the visited network through that new communication link from the home network. It no longer needs to query a variety of network elements using a variety of different interfaces, which may not even exist in the visited network, and possibly make the construction of the roaming connection fail. This increases the performance and flexibility of the communication, especially when roaming in 5G communication networks. In particular for 5G communication networks, the system architecture for the roaming scenario can be simplified since the new communication link can replace all other communications required for obtaining the roaming data.

In an exemplary implementation form, the method further comprises: requesting, by the network entity of the visited communication network, based on the UE ID, user-specific data of the UE from the home communication network for roaming the UE in the visited communication network.

This has the advantage that the network entity can query all necessary data from the home communication network of the UE and thus simplifies the roaming procedure for the UE. The network entity can thus provide the UE with an image of the data required for roaming.

In an exemplary implementation form, the method further comprises: establishing the communication link to the network entity of the home communication network via a roaming shared data layer.

This provides the advantage that the roaming shared data layer (RSDL) provides a dedicated roaming interface between the respective network entity of the visited communication network, e.g. the AMF or the RAN, and the corresponding network entity of the home communication network, e.g. the AMF or the SMF. This roaming interface can be a direct interface between the respective network entities. This roaming interface can be preconfigured or established upon request. In any case, the roaming process is simplified by using that new dedicated roaming interface.

In an exemplary implementation form, the method further comprises: initiating the roaming shared data layer via a user plane function of the visited communication network and a user plane function of the home communication network.

This provides the advantage that the roaming shared data layer can be efficiently established by using existing network functions of the system architecture, such as the user plane function.

In an exemplary implementation form, the method further comprises: writing data, by the home communication network, via the roaming shared data layer to the visited communication network, wherein the data of the RSDL is protected against manipulation and/or change by the visited communication network.

This provides the advantage that the data can be transferred via the RSDL to the visited communication network in a safe way that cannot be manipulated by the visited communication network.

In an exemplary implementation form, the method comprises: transmitting the registration request by the UE via a radio interface link to a radio access network (RAN) entity of the visited communication network; or transmitting the registration request by the UE via an N1 communication link to an AMF entity of the visited communication network.

This provides the advantage that there is flexibility in the network design for implementing the roaming request. Either the AMF entity or the RAN entity (or both) can receive the registration request of the UE and establish or utilize the roaming link to the home communication network via the roaming shared data layer.

In an exemplary implementation form, the method comprises: detecting by the AMF entity or by the RAN entity of the visited communication network that the registration request is related to a roaming communication with the UE.

This provides the advantage that the roaming request can be efficiently processed if these two network entities that have a direct interface to the UE can manage the roaming communication with the UE.

In an exemplary implementation form, the method comprises: establishing by the RAN entity or by the AMF entity of the visited communication network the communication link to the network entity of the home communication network.

This provides the advantage that the communication link to the network entity of the home communication network can be established with low latency since the RAN entity and the AMF entity of the visited network have a direct interface to the UE.

In an exemplary implementation form, the method comprises: establishing the communication link to the network entity of the home communication network via the N1 communication link and/or an N2 communication link between the AMF entity and the RAN entity of the visited communication network.

This provides the advantage that the N1 and N2 communication links are direct links to the UE. Hence, roaming with low latency can be performed.

In an exemplary implementation form, the method comprises: establishing the communication link to the home communication network with an AMF entity or with an SMF entity of the home communication network.

This provides the advantage that the AMF entity of the home communication network can manage the access and mobility management and also the network slice selection related to the roaming communication. The SMF entity can manage the session management functions, can set up sessions and manage them according to the network policy of the roaming communication.

In an exemplary implementation form, the method comprises: establishing the communication link to the home communication network with the SMF entity of the home communication network via the AMF entity of the home communication network and via an N11 communication link between the AMF entity and the SMF entity of the home communication network.

This provides the advantage that the SMF entity of the home communication network instead of the SMF entity of the visited communication network can perform all roaming activities for the UE. The SMF of the home communication network can easily access the relevant data required for the roaming from the data base of the UE's home communication network. This speeds up the roaming process.

In an exemplary implementation form, the method comprises: establishing a routing table in the network entity of the visited communication network for routing user plane data packets originating from the UE to the network entity of the home communication network or to another public land mobile network (PLMN).

This provides the advantage that the routing table can efficiently perform the routing of a huge number of different UEs to their respective home communication networks or to other PLMNs. Hence, implementing a routing table in the respective network entities reduces computational complexity of the routing procedure.

In an exemplary implementation form, the method comprises: routing by the network entity of the visited communication network user plane data packets originating from the UE via a user plane function (UPF) of the visited communication network and/or via the UPF and a session management function (SMF) of the visited communication network to the home communication network or to another PLMN.

This provides the advantage that the user plane data packets can leave the visited communication network as early as possible and can thus reduce the communication traffic in the visited communication network. Hence the overall communication system is more robust against traffic congestion and overload.

According to a second aspect, the invention relates to a network entity of a visited communication network, in particular a network slice of the visited communication network, for initiating a roaming communication link with a user equipment (UE) in the visited communication network, the network entity comprising: a communication interface with the UE; a communication interface with a network entity of a home communication network of the UE; and a processor, configured to: receive a registration request from the UE, wherein the registration request comprises an identity (UE ID) of the UE; detect, based on the UE ID, that the registration request is related to a roaming communication with the UE; determine the home communication network of the UE; establish a communication link to the network entity of the home communication network; and initiate the roaming communication link with the UE via the network entity of the home communication network.

Such a network entity that establishes a communication link from the visited communication network to a network entity of the home communication network improves the UE's connection procedure in the visited PLMN since the UE can obtain all relevant data from the home communication network to establish a roaming communication over the visited network through that new communication link. It no longer needs to query a variety of network elements using a variety of different interfaces, which may not even exist in the visited network, and possibly make the construction of the roaming connection fail. This increases the performance and flexibility of the communication, especially when roaming in 5G communication networks. In particular for 5G communication networks, the system architecture for the roaming scenario can be simplified since the new communication link can replace all other communications required for obtaining the roaming data.

In an exemplary implementation form of the network entity, the processor is configured to establish the communication link to the network entity of the home communication network via a roaming shared data layer, in particular via a user plane function of the visited communication network and a user plane function of the home communication network.

This provides the advantage that the roaming shared data layer (RSDL) provides a dedicated roaming interface between the respective network entity of the visited communication network, e.g. the AMF or the RAN, and the corresponding network entity of the home communication network, e.g. the AMF or the SMF. This roaming interface can be a direct interface between the respective network entities. This roaming interface can be preconfigured or established upon request. In any case, the roaming process is simplified by using that new dedicated roaming interface.

According to a third aspect, the invention relates to a communication system, in particular a 5G communication system, comprising: a user equipment (UE); a visited communication network of the UE, in particular a network slice of the visited communication network; a home communication network of the UE; and a network entity of the visited communication network according to the second aspect, configured to initiate a roaming communication link with the UE via a network entity of the home communication network.

Such a communication system speeds up the UE's connection procedure in the visited PLMN since the UE can obtain all relevant data from the home communication network to establish a roaming communication over the visited network through that new communication link. It no longer needs to query a variety of network elements using a variety of different interfaces, which may not even exist in the visited network, and possibly make the construction of the roaming connection fail. This increases the performance and flexibility of the communication, especially when roaming in 5G communication networks. In particular for 5G communication networks, the system architecture for the roaming scenario can be simplified since the new communication link can replace all other communications required for obtaining the roaming data.

According to a fifth aspect the invention relates to a computer program product comprising program code for performing the method according to the first aspect of the invention, when executed on a computer or a processor.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating a system architecture of a 5G communication network 100;
Fig. 2 shows a schematic diagram illustrating an exemplary roaming scenario for a 5G communication network 200 with visited communication network slice 240 and home communication network slice 210;
Fig. 3 shows a block diagram of an exemplary network entity 300 of a visited communication network according to the disclosure; and
Fig. 4 shows a schematic diagram illustrating an exemplary method 400 for initiating a roaming communication link with a UE in a visited communication network according to the disclosure.

### DETAILED DESCRIPTION OF EMBODIMENTS

In the following detailed description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

The following describes network entities such as network access entities and functions of such a network access entity or radio access network (RAN) entities. The network access entity enables access and mobility management in the communication network. Via the network access entity, communication terminals with their identity (UE ID) can register in the communication network and receive the permission to set up a communication connection. For example, in the 5G communication network, the network access entity may be an AMF (Access and Mobility Management Function) representing the access and mobility management function. This manages the access and mobility control. The AMF may also include network slice selection functionality. For wireless access, mobility management is not needed. The network access entity may be, for example, an MME (mobility management entity) in the 4G communication network. The MME is a network component of the LTE (Long Term Evolution) mobile radio standard, which performs the functions of paging to set up calls and generally communication links as well as signaling for control purposes. The MME forms the link between core network and access network. The MME manages the locations of all mobile communication terminals in the radio cells connected to it. In the LTE system, several cells are usually combined to form a tracking area. The management area of an MME can be divided into several tracking areas.

The radio access network (RAN) is part of a mobile telecommunication system. It implements a radio access technology (RAT). Conceptually, it resides between a device such as a mobile phone, a computer, or any remotely controlled machine and provides connection with its core network (CN). Depending on the standard, mobile phones and other wireless connected devices are varyingly known as user equipment (UE), terminal equipment, mobile station (MS), etc. RAN functionality is typically provided by a RAN entity, e.g. a silicon chip, residing in both the core network as well as the user equipment. Examples of radio access network types are GERAN, the GSM radio access network including EDGE packet radio services, UTRAN, the UMTS radio access network, E-UTRAN, the LTE radio access network and the 5G RAN. The RAN entity can for example include a base station, e.g. a NodeB or and eNodeB or a 5G capable radio cell.

The network access entity further provides the technical function of first establishing a security relationship with a previously unknown security device, in order to then be able to install security elements (keys) in the device itself and in the network application function (NAF) of the network access function. For example, the Diameter and Hypertext Transfer Protocol (http) protocols can be used. For example, SOAP may be used between BSF and NAF instead of diameter.

Involved in the maintenance of such a generic security relationship are the following functional elements: terminal, e.g. a mobile phone, i.e. User Equipment (UE), which wants to use a particular service, application server that provides the service, e.g. for Mobile TV, VoLTE, VoIP, FTP data transfer, media streaming, Internet browsing, etc., Network Application Function (NAF), the network access entity itself, which establishes a security relationship between UE and NAF and a database of the home network, e.g. HSS Home Subscriber Server (HSS) or UDR, unified data repository of the (mobile) network provider, which manages the respective user-specific profiles of its terminal users.

The network access entity network access feature is consulted by the application server (NAF) after a terminal has requested service access from it. Since the application server does not yet know the terminal at this time, it first refers this to the network access function. The terminal and the network access function now authenticate to each other; this can be done, for example, by means of the AKA protocol (Authentication and Key Agreement) and by inquiring the network access function to the Home Subscriber Server (HSS) or the UDR database of the home network. Subsequently, the network access function and the terminal (UE) agree on a session key to be used for encrypted data exchange with the application server (NAF). If the terminal now again turns to the application server, it can obtain both the session key and user-specific data from the network access function and start the data exchange with the terminal (UE). The appropriate session keys are used for cryptographic protection.

The security relationship itself between terminal and network access entity never leaves the sovereignty of the (mobile) network operator, only data derived from this security relationship (key) can be queried and used by applications.

In particular, the network entities described in this disclosure are intended to facilitate the establishment of the roaming connection of the communication terminal, as described below in this disclosure.

A roaming shared data layer (RSDL), also denoted as routing shared data layer, as described herein is a data layer, i.e. a data interface that is shared by two networks or network entities. The roaming shared data layer can be a data interface via which data can be transported from one network entity to another network entity, e.g. from an AMF or SMF entity of the home communication network to a network entity (e.g. AMF or SMF) of the visited communication network. The roaming shared data layer may be controlled by user plane functions (UPFs) of the home communication network and/or the visited communication network. The roaming shared data layer may use (or share) the data network (DN) between visited communication network and home communication network. A specific function of the RSDL is for example to provide data from remote, e.g. from the home communication network. The roaming shared data layer may provide a data layer sharing particularly for the roaming scenario. For example, the roaming shared data layer may provide a shared data layer to the following data base components: Unified Data Repository (UDR), Unified Data Management (UDM), Network Slice Selection Function (NSSF), Authentication Server Function (AUSF), Policy Control Function (PCF), e.g. according to the specification 3GPP TS 23.501.

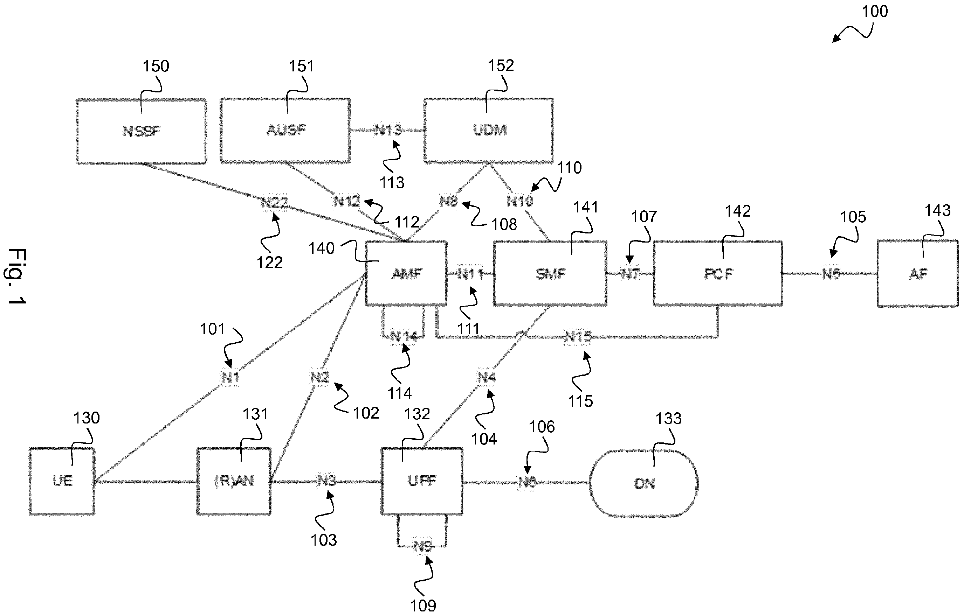

Fig. 1 shows a schematic diagram illustrating a system architecture of a 5G communication network 100. The 5G system architecture 100 comprises the network functions illustrated in the individual blocks of Figure 1.

The UE (User Equipment) block 130 represents the user equipment or client terminal or mobile communication device which can be operated by the subscriber to initiate communication in the 5G network, i.e. starting a communication (mobile originating, MO) or accepting (mobile terminating, MT). The UE can also initiate communication without user interaction, e.g. it can be a machine terminal, e.g. for a car or a robot or other device.

The block (R)AN ((radio) access network) 131 represents the (radio) access network by which the UE 130 obtains access to the 5G communication network. The interface between UE 130 and (R)AN is either an air interface when the access network 131 is a wireless network or wired when the access network is a wired network.

The Access and Mobility Management Function (AMF) block 140 represents the access and mobility management function. It manages the access and mobility functions of the UE. The AMF may also include network slice selection functionality. For wireless access, mobility management is not needed.

The Session Management Function (SMF) block 141 represents the session management function. It sets up sessions and manages them according to the network policy.

The User Plane Function (UPF) block 132 represents the User Plane function. UPFs can be applied in various configurations and locations, according to the service type.

The Policy Control Function (PCF) block 142 represents the policy control function. It provides a policy framework that includes network slicing, roaming, and mobility management. This corresponds to the functionality of a PCRF in 4G systems.

The block UDM (Unified Data Management) 152 provides a shared data management. This saves subscriber data and profiles. This is equivalent to the functionality of an HSS in 4G systems, but is used for both mobile and wired access in the NG Core network.

The block DN (Data Network) 133 provides the data network over which data is transmitted, e.g. from one UE to another UE.

The block AUSF (Authentication Server Function) 151 provides authentication functionality with which the subscriber or the UE can log on to the network.

The AF (Application Function) block 151 provides application functions that enable certain services to be executed.

The NSSF block (Network Slice Selection Function) 150 provides functions to select particular network slices.

The 5G system architecture shown in Figure 1 represents the structure of the NG (Next Generation) network, which consists of network functions (NFs) and reference points connecting the NFs. The UE 130 is connected to either a Radio Access Network (RAN) 131 or an Access Network (AN) 131. In addition, the UE 130 is connected to the Access and Mobility Function (AMF) 140. The RAN 131 represents a base station using new RAT and advanced LTE technologies, while the AN 131 is a general base station with non-3GPP access, e.g. a WiFi Access Point. The Next Generation core network 100 consists of various network functions (NFs). In Figure 1, there are seven Next Generation core NFs, namely (1) AMF 140, (2) Session Management Function (SMF) 141, (3) Policy Control Function (PCF) 142, (4) Application Function (AF) 143, (5) Authentication Server Function (AUSF) 151, (6) User Plane Function (UPF) 132, and (7) User Data Management (UDM) 152.

The network function (NF) represents the processing function inherited from 3GPP in NextGen or NG. It has both functional behavior and serves as an interface. An NF can either be implemented as a network element (or network entity) on dedicated hardware, as a software instance on dedicated hardware, or instantiated as a virtualized function on a suitable platform, e.g. B. a cloud infrastructure.

The AMF 140 provides UE-based authentication, authorization, mobility management, etc. A UE 130 is basically connected to a single AMF 140 because the AMF 140 is independent of the access technology. That means, also a UE 130 with multiple access technologies is only connected to a single AMF 140.

The SMF 141 is responsible for session management and assigns IP addresses to the UEs 130. In addition, the SMF 141 selects the UPF 132 and controls the UPF 132 for data transfer. If a UE 130 has multiple sessions, different SMFs 141 may be associated with each session to individually control them and possibly provide multiple functionalities per session.

The AF 143 provides information about the packet flow and provides it to the PCF 142, which is responsible for policy control to ensure Quality of Service (QoS). Based on this information, PCF 142 will determine the Mobility and Session Management policies for the AMF 140 and SMF 141 to function properly.

The AUSF 151 stores data for authentication of the UE 130 while the UDM 152 stores subscription data of the UE 130. The data network DN 133, which is not part of the NG core network 100, provides Internet access and operator services.

The architectural reference point view can be used to represent detailed message flows in Next Generation (NG) standardization. The reference point Next Generation NG1 101 is defined as transmission signaling between the UE 130 and the AMF 140. The reference points for the connection between the AN 131 and the AMF 140 and between the AN 131 and the UPF 132 are referred to as NG 2 102 and NG3 103. There is no reference point between the AN 131 and the SMF 141, but there is a reference point, NG11 111, between the AMF 140 and the SMF 141. This means that the SMF 141 is controlled by the AMF 140. NG4 104 is used by the SMF 141 and the UPF 132 to allow the UPF 132 to be set with the generated control signal from the SMF 141, and the UPF 132 can report its status to the SMF 141. NG9 109 is the reference point for the connection between different UPFs 132 and NG14 114 is the reference point between different AMFs 140. NG15 115 and NG7 107 are defined in order for PCF 142 to apply its policies to AMF 140 and SMF 141, respectively. NG12 112 is required for the AMF 140 to perform authentication of the UE 130. NG8 108 and NG10 110 are defined because the subscription data of UE 130 is needed by AMF 140 and SMF 141.

The Next Generation Network 100 aims to realize a separation of user and control or control level. The user level transmits the user traffic, while the control level transmits the signaling on the network. In Figure 1, the UPF 132 is in the user plane and all other network functions, i.e. AMF 140, SMF 141, PCF 142, AF 143, AUS 151 and UDM 152 are in the control plane. Separation of user and control planes guarantees independent scaling of resources at each network level. The separation also allows the provision of UPFs 132 in a distributed manner separate from the functions of the control plane.

The NG Architecture 100 consists of modularized functions. For example, AMF 140 and SMF 141 are independent functions in the control plane. Separate AMF 140 and SMF 141 allow independent development and scaling. Other control plane functions such as PCF 142 and AUSF 151 may be separated as shown in Figure 1. The modularized functional design illustrated in Figure 1 also enables the Next Generation Network 100 to flexibly support various services.

Each network function interacts directly with another NF. At the control level, a series of interactions between two NFs are defined as a service, so that they can be reused. This service allows support for modularity. The user level supports interactions such as forwarding operations between different UPFs 132.

The Next Generation Network 100 supports roaming similar to EPS (Enhanced Packet Switching). There are two types of application scenarios, Home Routed (HR) and Local Breakout (LBO). The structures that support roaming and the corresponding session management according to the concept presented here will be described in more detail below.

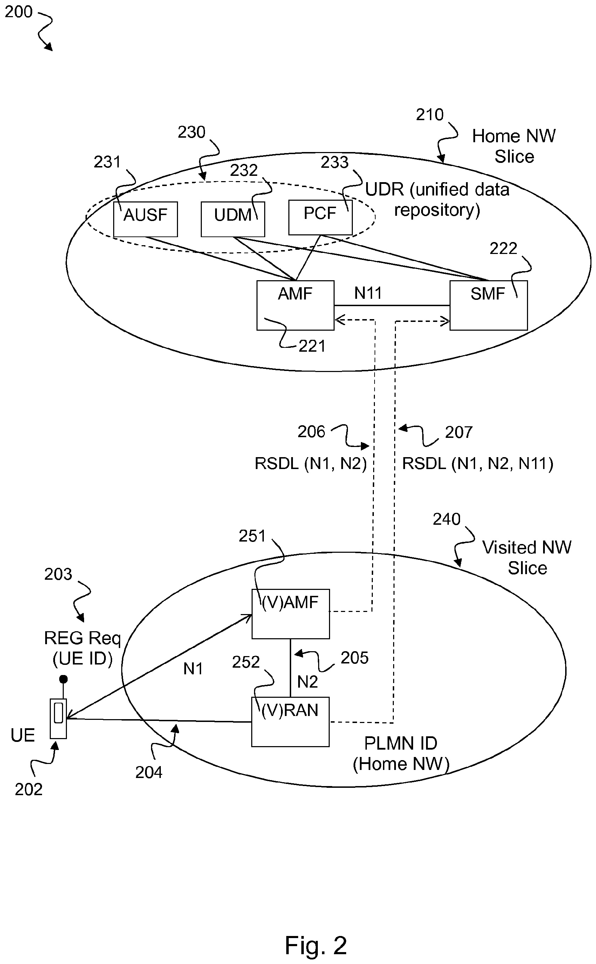

Fig. 2 shows a schematic diagram illustrating an exemplary roaming scenario for a 5G communication network 200 with visited communication network slice 240 and home communication network slice 210.

The 5G communication network 200 is divided into a home PLMN (Public Land Mobile Network) 210 and a visited PLMN 240. Both networks 210, 240 have the same structure as generally described above in Figure 1, for the sake of clarity not all network elements are shown in detail. In particular, the visited network 240 includes an AMF network element 251, also referred to herein as (V) AMF, having the same functionality and interfaces as the AMF 140 described above with respect to FIG. 1. The visited network 240 further includes a radio access network (RAN) element 252, also referred to herein as (V) RAN, having the same functionality and interfaces as the RAN 131 described above with reference to FIG. 1.

The same network elements (with the same functionalities and interfaces) also include the home PLMN 210, i.e. an AMF network element 221, an SMF network element 222 and a database UDR 230 with the network elements AUSF 231, UDM 232 and PCF 233. The home PLMN is the PLMN in which the communication terminal or the user of the communication terminal is registered, i.e. where he has a contract with the network operator. The visited PLMN is the PLMN in whose network coverage the communication terminal or its user is currently residing and via which the user has communicated, i.e. wants to establish a roaming connection.

Specifically, the method for initiating the roaming communication link with the user equipment (UE) 202 in the visited communication network 240, in particular in a network slice of the visited communication network 240, includes the following steps:
The UE transmits a registration request 203 to a network entity, e.g. to entity 252 or to entity 251, of the visited communication network 240. The registration request comprises an identity (UE ID) of the user equipment, e.g. an IMSI or a telephone number or IMEI or SIM ID. The network entity (252 and/or 251) of the visited communication network 240 detects based on the UE ID, that the registration request 203 is related to a roaming communication with the UE. The network entity (252 and/or 251) of the visited communication network 240 determines a home communication network 210 of the UE 202, e.g. based on a PLMN ID determined from the UE ID. The network entity (252 and/or 251) of the visited communication network 240 establishes a communication link (206 and/or 207) to a network entity (e.g. 221 and/or 222) of the home communication network 210. Then, the roaming communication link with the UE (202) can be initiated via the network entity (e.g. 221 and/or 222) of the home communication network 210. The roaming communication link with the UE 202 can be initiated by the UE or by a network entity of the home communication network 210 or by a network entity of the visited communication network 240.

The network entity (252 and/or 251) of the visited communication network 240 can request, based on the UE ID, user-specific data of the UE from the home communication network 210 for roaming the UE in the visited communication network 240. The communication link (206 or 207) to the network entity (221 and/or 222) of the home communication network (210) can be established via a roaming shared data layer, denoted as RSDL in Fig. 2. The roaming shared data layer may be established via interfaces N1 and N2, i.e. via VAMF 251 and VRAN 252 of visited network 240 to AMF 221 of home network 210. Alternatively the roaming shared data layer may be established via interfaces N1, N2 and N11, i.e. via VAMF 251 and VRAN 252 of visited network 240 via AMF 221 of home network 210 to SMF 222 of home network 210. The roaming shared data layer can be initiated via a user plane function of the visited communication network (240) and a user plane function of the home communication network (210), e.g. a user plane function 132 as described in Fig.1 for the 5G system architecture.

The UE 202 can transmit the registration request 203 via a radio interface link 204 to the RAN entity 252 of the visited communication network 240. Alternatively, the UE 202 can transmit the registration request 203 via the N1 communication link to the AMF entity 251 of the visited communication network 240. The AMF entity 251 or the RAN entity 252 of the visited communication network 240 may detect whether the registration request 203 is related to a roaming communication with the UE 202. If a roaming communication scenario is detected, the communication link 207 to the network entity (221 and/or 222) of the home communication network 210 may then be established by the RAN entity 252 or by the AMF entity 251 of the visited communication network 240. The roaming scenario may for example be detected if the UE ID is not stored in the data base of the visited communication network 240. Alternatively, the roaming scenario may for example be detected if the UE ID is stored in the data base 230 of the home communication network 210.

The communication link 207 to the network entity (221 and/or 222) of the home communication network 210 may for example be established via the N1 communication link and/or an N2 communication link between the AMF entity 251 and the RAN entity 252 of the visited communication network 210. The communication link 207 to the home communication network 210 may for example be established with the AMF entity 221 or with the SMF entity 222 of the home communication network 210. The communication link 207 to the home communication network 210 may for example be established with the SMF entity 222 of the home communication network 210 via the AMF entity 221 of the home communication network 210 and via an N11 communication link between the AMF entity 221 and the SMF entity 222 of the home communication network 210 as shown in Fig. 2.

The network entity (221 and/or 222) of the visited communication network 240 may include a routing table for routing user plane data packets originating from the UE 202 to the network entity (221 and/or 222) of the home communication network 210 or to another public land mobile network (PLMN).

The routing table may also route user plane data packets destined for the UE 202 to the UE 202. The network entity (221 and/or 222) of the visited communication network 240 may be configured to route user plane data packets originating from the UE via a user plane function (UPF) of the visited communication network (240), e.g. a UPF 132 as described above with respect to Fig. 1, and/or via the UPF and a session management function (SMF) of the visited communication network (240), e.g. an SMF 141 as described above with respect to Fig. 1, to the home communication network 210 or to another PLMN. The routing function may implement a local breakout for routing the data traffic to another PLMN, e.g. a PLMN that supports specific services and/or capabilities requested by the UE. The routing table may also route user plane data packets destined for the UE 202 to the UE 202.

The registration request 203 may further include an identification of a specific service which the communication terminal 202 requests from the visited communication network 240. The specific service may be provided by the visited communication network 240 based on the identification of the specific service if the visited communication network 240 supports the specific service. Otherwise, if the visited communication network 240 does not support the specific service, the network entity (251 or 252) may transmit a PLMN ID of another communication network to the UE supporting the specific service.

The registration request 203 may further include a key for authenticating the communication terminal 202. The network entity (251 and/or 252) may authenticate the communication terminal 202 via an authentication entity 231 of the home communication network 210 based on the key.

In the following, an exemplary procedure of message transmission for establishing the roaming connection is described.
1) UE 202 starts registration (attach) procedure.
2) UE 202 connects to Visited PLMN 240 and signals UE ID, e.g. IMEI or SIM ID.
3) Registration arrives in (Visiting) RAN 252.
4) RAN 252 recognizes by UE ID PLMN ID that it is roaming call; alternatively: AMF (Visited) 251 detects roaming call.
5) RAN 252 or AMF 251 determine home network 210 of UE 202.
6) RAN 252 or AMF 251 establishes connection to AMF 221 in home network 210 and obtains all data from home network 210.
7) After successful registration, all UE communication is performed with the AMF 221 and SMF 222 / UPF of the home network 210. Alternatively, the user plane (UPF) or session control SMF can be routed separately to the VPLMN 240 (or other network).

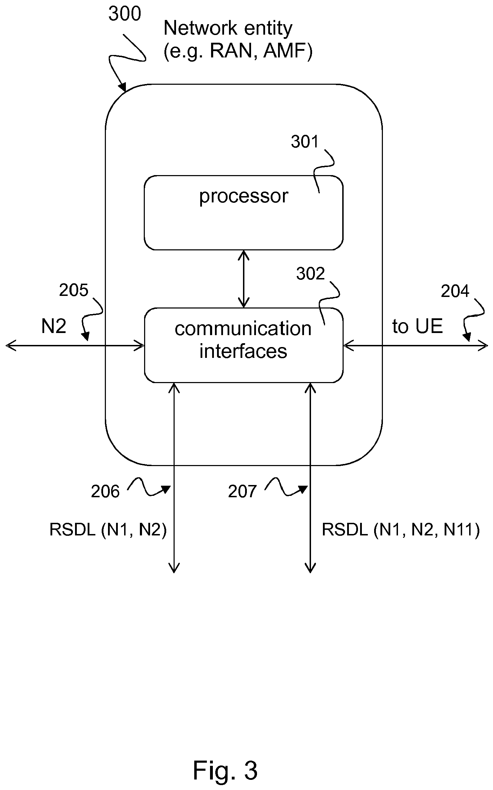

Fig. 3 shows a block diagram of an exemplary network entity 300 of a visited communication network according to the disclosure. The network entity 300 may be located in a visited communication network 240 or in a network slice of the visited communication network 240. The network entity 300 may for example include a RAN entity 252 or an AMF entity 251 as described above with respect to Fig. 2. The network entity 300 may be implemented in hardware or software, for example as a silicon chip designed to implement the above-described functionality of the network entity or as a network access function as described above.

The network entity 300 can be used to initiate a roaming communication link with the user equipment (UE) 202 in the visited communication network 240 or in the network slice of the visited communication network 240. The network entity 300 includes one or more communication interfaces 302, e.g. a communication interface 204 with the UE 202, a communication interface N2 205 with the RAN entity 252 (or alternatively with the AMF entity 251 if the network entity 300 includes the RAN entity 252) and a communication interface (206 or 207) with a network entity (222 and/or 221) of the home communication network 210 of the UE 202. The network entity 300 further includes a processor 301 that is configured to implement the techniques described above with respect to Fig. 2.

I.e., the processor 301 is configured to: receive a registration request 203 from the UE 202, wherein the registration request comprises an identity (UE ID) of the UE; detect, based on the UE ID, that the registration request 203 is related to a roaming communication with the UE; determine the home communication network 210 of the UE 202; establish a communication link 206 and/or 207) to the network entity (221 and/or 222) of the home communication network 210; and initiate the roaming communication link with the UE 202 via the network entity (221 and/or 222) of the home communication network 210.

The processor 301 may further be configured to establish the communication link (206 and/or 207) to the network entity (221 and/or 222) of the home communication network 210 via a roaming shared data layer, e.g. as described above with respect to Fig. 2. The roaming shared data layer may be a user plane function of the visited communication network 240 and a user plane function of the home communication network 210. The roaming shared data layer (RSDL) as shown in Fig. 2, can be established upon request,.e.g. responsive to the registration request 203 from UE 202 or may be preestablished, e.g. during startup of the network entity 300.

The network entity 300 may be used in a communication system, e.g. as described above with respect to Fig. 2. Such a communication system may be implemented as a 5G communication system. The communication system comprises: the user equipment (UE) 202; the visited communication network 240 of the UE 202, in particular a network slice of the visited communication network 240; a home communication network 210 of the UE 202; and a network entity 300, 252, 251 of the visited communication network 240, e.g. as described above which may be configured to initiate a roaming communication link with the UE 202 via a network entity (221 and/or 222) of the home communication network 210.

In an exemplary implementation the following functionality can be implemented by the visited network or the visited network slice: RAN 252 routes directly to home network 210, i.e. to AMF 221 or SMF 222 of the HPLMN 210. N1, N2 interface is implemented between RAN 252 (VPLMN 240) and AMF 221 (HPLMN 210). N1, N2, N11 Interfaces are implemented between RAN 252 (VPLMN 240) and AMF 221 (HPLMN 210) and SMF 222 / UPF 132 (HPLMN 210). RAN 252 alternatively routes the user plane directly to UPF 132 and / or SMF 222 + UPF 132 in VPLMN 210 (local breakout policy) or another network (PLMN).

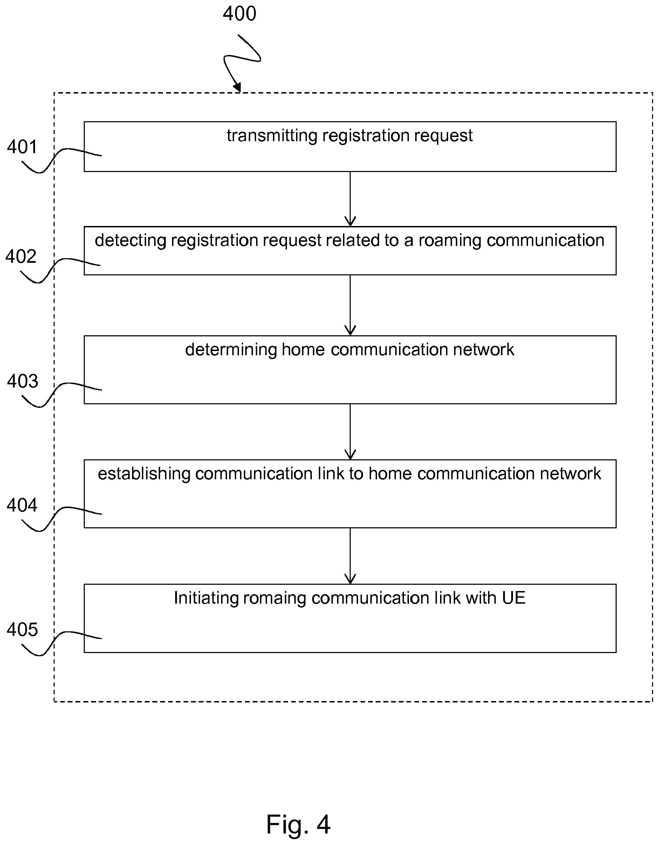

Fig. 4 shows a schematic diagram illustrating an exemplary method 400 for initiating a roaming communication link with a UE in a visited communication network according to the disclosure.

In a first step 401, the method 400 includes: transmitting a registration request 203 by the UE 202 to a network entity 300, 252, 251 of the visited communication network 240, wherein the registration request comprises an identity (UE ID) of the user equipment, e.g. as described above with respect to Figures 2 and 3.

In a second step 402, the method 400 includes: detecting by the network entity 300, 252, 251 of the visited communication network 240, based on the UE ID, that the registration request 203 is related to a roaming communication with the UE, e.g. as described above with respect to Figures 2 and 3.

In a third step 403, the method 400 includes: determining by the network entity 300, 252, 251 of the visited communication network 240 a home communication network 210 of the UE 202, e.g. as described above with respect to Figures 2 and 3.

In a fourth step 404, the method 400 includes: establishing by the network entity 300, 252, 251 of the visited communication network 240 a communication link 206, 207 to a network entity 221, 222 of the home communication network 210, e.g. as described above with respect to Figures 2 and 3.

In a fifth step 405, the method 400 includes: initiating the roaming communication link with the UE 202 via the network entity 300, 221, 222 of the home communication network 210, e.g. as described above with respect to Figures 2 and 3.

The method 500 may include further steps, such as, for example, according to the method steps described above with reference to FIGS. 2 and 3.

Another aspect of the invention is related to a computer program product comprising program code for performing the method 400 or the functionalities described above, when executed on a computer or a processor. The method 400 may be implemented as program code that may be stored on a non-transitory computer medium. The computer program product may implement the techniques described above with respect to Figures 2 to 4.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims, the invention may be practiced otherwise than as specifically described herein.

## Claims

1. A method for initiating a roaming communication link with a user equipment, UE (202) in a visited communication network (240), the method comprising:
transmitting a registration request (203) by the UE (202) to a network entity (300) of the visited communication network (240), wherein the registration request comprises an identity, UE ID, of the user equipment;
detecting by the network entity (300) of the visited communication network (240), based on the UE ID, that the registration request (203) is related to a roaming communication with the UE;
determining by the network entity (300) of the visited communication network (240) a home communication network (210) of the UE (202);
establishing by an Access and Mobility Management Function, AMF, entity (251) of the visited communication network (240) a communication link (206, 207) to a network entity (221, 222) of the home communication network (210) via a dedicated roaming interface between a Radio Access Network, RAN entity (252) of the visited communication network (240) and the network entity (221, 222) of the home communication network (210),
wherein the communication link (206, 207) to the home communication network (210) is established with a Session Management Function, SMF, entity (222) of the home communication network (210) via an AMF entity (221) of the home communication network (210) and via an N11 communication link between the AMF entity (221) of the home communication network (210) and the SMF entity (222) of the home communication network (210); and
initiating the roaming communication link with the UE (202) via the communication link to the network entity (221, 222) of the home communication network (210).

2. The method of claim 1, further comprising:
requesting, by the network entity (300) of the visited communication network (240), based on the UE ID, user-specific data of the UE from the home communication network (210) for roaming the UE in the visited communication network (240).

3. The method of claim 1 or 2, further comprising:
initiating the dedicated roaming interface via a user plane function of the visited communication network (240) and a user plane function of the home communication network (210).

4. The method of one of the preceding claims, comprising:
writing data, by the home communication network (210), via the dedicated roaming interface to the visited communication network (240), wherein the data of the dedicated roaming interface is protected against any manipulation and/or any change which is performed by the visited communication network (240).

5. The method of one of the preceding claims, comprising:
transmitting the registration request (203) by the UE (202) via a radio interface link (204) to the RAN entity (252) of the visited communication network (240); or
transmitting the registration request (203) by the UE (202) via an N1 communication link to the AMF entity (251) of the visited communication network (240).

6. The method of claim 5, comprising:
detecting by the AMF entity (251) or by the RAN entity (252) of the visited communication network (240) that the registration request (203) is related to a roaming communication with the UE (202).

7. The method of one of the preceding claims, comprising:
establishing the communication link (207) to the network entity (221, 222) of the home communication network (210) via the N1 communication link between the UE (202) and the AMF entity (251) of the visited communication network (240) and/or via an N2 communication link between the AMF entity (251) and the RAN entity (252) of the visited communication network (240).

8. The method of one of the preceding claims, comprising:
establishing a routing table in the network entity (300) of the visited communication network (240) for routing user plane data packets originating from the UE (202) to the network entity (221, 222) of the home communication network (210) or to another public land mobile network (PLMN).

9. The method of one of the preceding claims, comprising:
routing by the network entity (300) of the visited communication network (240) user plane data packets originating from the UE via a user plane function (UPF) of the visited communication network (240) and/or via the UPF and a session management function (SMF) of the visited communication network (240) to the home communication network (210) or to another PLMN.

10. A network entity (300) of a visited communication network (240) for initiating a roaming communication link with a user equipment, UE (202) in the visited communication network (240), the network entity (300) comprising:
a communication interface (204) with the UE (202);
a communication interface (206, 207) with a network entity (222, 221) of a home communication network (210) of the UE (202); and
a processor (301), configured to:
receive a registration request (203) from the UE (202), wherein the registration request comprises an identity, UE ID of the UE;
detect, based on the UE ID, that the registration request (203) is related to a roaming communication with the UE;
determine the home communication network (210) of the UE (202);
establish a communication link (206, 207) to the network entity (221, 222) of the home communication network (210) via a dedicated roaming interface between a Radio Access Network, RAN, entity (252) of the visited communication network (240) and the network entity (221, 222) of the home communication network (210), wherein the communication link (206, 207) to the home communication network (210) is established with a Session Management Function, SMF, entity (222) of the home communication network (210) via an Access and Mobility Management Function, AMF, entity (221) of the home communication network (210) and via an N11 communication link between the AMF entity (221) of the home communication network (210) and the SMF entity (222) of the home communication network (210); and
initiate the roaming communication link with the UE (202) via the communication link to the network entity (221, 222) of the home communication network (210).

11. The network entity (300, 252, 251) of claim 10,
wherein the processor (301) is configured to establish the communication link (206, 207) to the network entity (221, 222) of the home communication network (210) via a user plane function of the visited communication network (240) and a user plane function of the home communication network (210).

## Patentansprüche

1. Verfahren zum Initiieren einer Roaming-Kommunikationsverbindung mit einer Benutzereinrichtung, UE (202) in einem besuchten Kommunikationsnetzwerk (240), wobei das Verfahren aufweist:
Senden einer Registrierungsanforderung (203) durch die UE (202) an eine Netzwerkentität (300) des besuchten Kommunikationsnetzwerks (240), wobei die Registrierungsanforderung eine Identität, UE ID, der Benutzereinrichtung aufweist;
Erfassen durch die Netzwerkentität (300) des besuchten Kommunikationsnetzwerks (240) beruhend auf der UE ID, dass die Registrierungsanforderung (203) mit einer Roaming-Kommunikation mit der UE zusammenhängt;
Bestimmen durch die Netzwerkentität (300) des besuchten Kommunikationsnetzwerks (240) eines Heimatkommunikationsnetzwerks (210) der UE (202);
Herstellen durch eine Zugangs- und Mobilitätsverwaltungsfunktions-, AMF, Entität (251) des besuchten Kommunikationsnetzwerks (240) einer Kommunikationsverbindung (206, 207) mit einer Netzwerkentität (221, 222) des Heimatkommunikationsnetzwerks (210) über eine dedizierte Roaming-Schnittstelle zwischen einer Funkzugangsnetzwerk-, RAN, Entität (252) des besuchten Kommunikationsnetzwerks (240) und der Netzwerkentität (221, 222) des Heimatkommunikationsnetzwerks (210),
wobei die Kommunikationsverbindung (206, 207) mit dem Heimatkommunikationsnetzwerk (210) mit einer Sitzungsverwaltungsfunktions-, SMF, Entität (222) des Heimatkommunikationsnetzwerks (210) über eine AMF-Entität (221) des Heimatkommunikationsnetzwerks (210) und über eine N11-Kommunikationsverbindung zwischen der AMF-Entität (221) des Heimatkommunikationsnetzwerks (210) und der SMF-Entität (222) des Heimatkommunikationsnetzwerks (210) hergestellt wird; und
Initiieren der Roaming-Kommunikationsverbindung mit dem UE (202) über die Kommunikationsverbindung zur Netzwerkentität (221, 222) des Heimatkommunikationsnetzwerks (210).

2. Verfahren nach Anspruch 1, das ferner aufweist:
Anfordern durch die Netzwerkentität (300) des besuchten Kommunikationsnetzwerks (240) beruhend auf der UE ID von benutzerspezifischen Daten der UE vom Heimatkommunikationsnetzwerk (210) zum Roaming der UE im besuchten Kommunikationsnetzwerk (240).

3. Verfahren nach Anspruch 1 oder 2, das ferner aufweist:
Initiieren der dedizierten Roaming-Schnittstelle über eine Benutzerebenenfunktion des besuchten Kommunikationsnetzwerks (240) und eine Benutzerebenenfunktion des Heimatkommunikationsnetzwerks (210).

4. Verfahren nach einem der vorhergehenden Ansprüche, das aufweist:
Schreiben von Daten durch das Heimatkommunikationsnetzwerk (210) über die dedizierte Roaming-Schnittstelle zum besuchten Kommunikationsnetzwerk (240), wobei die Daten der dedizierten Roaming-Schnittstelle gegen jede Manipulation und/oder jede Veränderung geschützt sind, die durch das besuchte Kommunikationsnetzwerk (240) durchgeführt wird.

5. Verfahren nach einem der vorhergehenden Ansprüche, das aufweist:
Senden der Registrierungsanforderung (203) durch die UE (202) über eine Funkschnittstellenverbindung (204) an die RAN-Entität (252) des besuchten Kommunikationsnetzwerks (240); oder
Senden der Registrierungsanforderung (203) durch die UE (202) über eine Nl-Kommunikationsverbindung an die AMF-Entität (251) des besuchten Kommunikationsnetzwerks (240).

6. Verfahren nach Anspruch 5, das aufweist:
Erfassen durch die AMF-Entität (251) oder durch die RAN-Entität (252) des besuchten Kommunikationsnetzwerks (240), dass die Registrierungsanforderung (203) mit einer Roaming-Kommunikation mit der UE (202) zusammenhängt.

7. Verfahren nach einem der vorhergehenden Ansprüche, das aufweist:
Herstellen der Kommunikationsverbindung (207) mit der Netzwerkentität (221, 222) des Heimatkommunikationsnetzwerks (210) über die N1-Kommunikationsverbindung zwischen der UE (202) und der AMF-Entität (251) des besuchten Kommunikationsnetzwerks (240) und/oder über eine N2 Kommunikationsverbindung zwischen der AMF-Entität (251) und der RAN-Entität (252) des besuchten Kommunikationsnetzwerks (240).

8. Verfahren nach einem der vorhergehenden Ansprüche, das aufweist:
Herstellen einer Routing-Tabelle in der Netzwerkentität (300) des besuchten Kommunikationsnetzwerks (240) zum Leiten von Benutzerebenen-Datenpaketen, die von der UE (202) herrühren, zur Netzwerkentität (221, 222) des Heimatkommunikationsnetzwerks (210) oder einem anderen öffentlichen terrestrischen Mobilfunknetzwerk (PLMN).

9. Verfahren nach einem der vorhergehenden Ansprüche, das aufweist:
Leiten durch die Netzwerkentität (300) des besuchten Kommunikationsnetzwerks (240) von Benutzerebenen-Datenpaketen, die von der UE herrühren, über eine Benutzerebenenfunktion (UPF) des besuchten Kommunikationsnetzwerks (240) und/oder über die UPF und eine Sitzungsverwaltungsfunktion (SMF) des besuchten Kommunikationsnetzwerks (240) zum Heimatkommunikationsnetzwerk (210) oder zu einem anderen PLMN.

10. Netzwerkentität (300) eines besuchten Kommunikationsnetzwerks (240) zum Initiieren einer Roaming-Kommunikationsverbindung mit einer Benutzereinrichtung, UE, (202) im besuchten Kommunikationsnetzwerk (240), wobei die Netzwerkentität (300) aufweist:
eine Kommunikationsschnittstelle (204) mit der UE (202);
eine Kommunikationsschnittstelle (206, 207) mit einer Netzwerkentität (222, 221) eines Heimatkommunikationsnetzwerks (210) der UE (202); und
einen Prozessor (301), der konfiguriert ist:
eine Registrierungsanforderung (203) von der UE (202) zu empfangen, wobei die Registrierungsanforderung eine Identität, UE ID, der UE aufweist;
beruhend auf der UE ID zu erfassen, dass die Registrierungsanforderung (203) mit einer Roaming-Kommunikation mit der UE zusammenhängt;
das Heimatkommunikationsnetzwerk (210) der UE (202) zu bestimmen;
eine Kommunikationsverbindung (206, 207) mit der Netzwerkentität (221, 222) des Heimatkommunikationsnetzwerks (210) über eine dedizierte Roaming-Schnittstelle zwischen einer Funkzugangsnetzwerk-, RAN, Entität (252) des besuchten Kommunikationsnetzwerks (240) und der Netzwerkentität (221, 222) des Heimatkommunikationsnetzwerks (210) herzustellen, wobei die Kommunikationsverbindung (206, 207) mit dem Heimatkommunikationsnetzwerk (210) mit einer Sitzungsverwaltungsfunktions-, SMF, Entität (222) des Heimatkommunikationsnetzwerks (210) über eine Zugangs- und Mobilitätsverwaltungsfunktions-, AMF, Entität (221) des Heimatkommunikationsnetzwerks (210) und über eine N11-Kommunikationsverbindung zwischen der AMF-Entität (221) des Heimatkommunikationsnetzwerks (210) und der SMF-Entität (222) des Heimatkommunikationsnetzwerks (210) hergestellt wird; und
die Roaming-Kommunikationsverbindung mit der UE (202) über die Kommunikationsverbindung zur Netzwerkentität (221, 222) des Heimatkommunikationsnetzwerks (210) zu Initiieren.

11. Netzwerkentität (300, 252, 251) nach Anspruch 10,
wobei der Prozessor (301) konfiguriert ist, die Kommunikationsverbindung (206, 207) mit der Netzwerkentität (221, 222) des Heimatkommunikationsnetzwerks (210) über eine Benutzerebenenfunktion des besuchten Kommunikationsnetzwerks (240) und eine Benutzerebenenfunktion des Heimatkommunikationsnetzwerks (210) herzustellen.

## Revendications

1. Procédé d'initialisation d'une liaison de communication d'itinérance avec un équipement d'utilisateur UE (202) dans un réseau de communication visité (240), ledit procédé comprenant :
la transmission d'une demande d'enregistrement (203) par l'UE (202) à une entité de réseau (300) du réseau de communication visité (240), ladite demande d'enregistrement comprenant un identifiant UE ID de l'équipement d'utilisateur ;
la détection par l'entité de réseau (300) du réseau de communication visité (240), sur la base de l'identifiant d'UE, que la demande d'enregistrement (203) est relative à une communication d'itinérance avec l'UE ;
la détermination par l'entité de réseau (300) du réseau de communication visité (240) d'un réseau de communication domestique (210) de l'UE (202) ;
l'établissement par une entité de fonction de gestion d'accès et de mobilité AMF (251) du réseau de communication visité (240) d'une liaison de communication (206, 207) vers une entité de réseau (221, 222) du réseau de communication domestique (210) via une interface d'itinérance dédiée entre une entité de réseau d'accès radio RAN (252) du réseau de communication visité (240) et l'entité de réseau (221, 222) du réseau de communication domestique (210),
où la liaison de communication (206, 207) vers le réseau de communication domestique (210) est établie avec une entité de fonction de gestion de session SMF (222) du réseau de communication domestique (210) via une entité AMF (221) du réseau de communication domestique (210) et via une liaison de communication N11 entre l'entité AMF (221) du réseau de communication domestique (210) et l'entité SMF (222) du réseau de communication domestique (210) ; et
l'initialisation de la liaison de communication d'itinérance avec l'UE (202) via la liaison de communication vers l'entité de réseau (221, 222) du réseau de communication domestique (210).

2. Procédé selon la revendication 1, comprenant en outre :
la demande, par l'entité de réseau (300) du réseau de communication visité (240), sur la base de l'identifiant d'UE, de données spécifiques à l'utilisateur de l'UE provenant du réseau de communication domestique (210) pour l'itinérance de l'UE dans le réseau de communication visité (240).

3. Procédé selon la revendication 1 ou la revendication 2, comprenant en outre :
l'initialisation de l'interface d'itinérance dédiée via une fonction de plan d'utilisateur du réseau de communication visité (240) et une fonction de plan d'utilisateur du réseau de communication domestique (210).

4. Procédé selon l'une des revendications précédentes, comprenant :
l'écriture de données vers le réseau de communication visité (240), par le réseau de communication domestique (210), via l'interface d'itinérance dédiée, les données de l'interface d'itinérance dédiée étant protégées contre toute manipulation et/ou toute modification effectuée par le réseau de communication visité (240).

5. Procédé selon l'une des revendications précédentes, comprenant :
la transmission par l'UE (202) de la demande d'enregistrement (203) à l'entité RAN (252) du réseau de communication visité (240) via une liaison d'interface radio (204) ; ou
la transmission par l'UE (202) de la demande d'enregistrement (203) à l'entité AMF (251) du réseau de communication visité (240) via une liaison de communication N1.

6. Procédé selon la revendication 5, comprenant :
la détection par l'entité AMF (251) ou par l'entité RAN (252) du réseau de communication visité (240) que la demande d'enregistrement (203) est relative à une communication d'itinérance avec l'UE (202).

7. Procédé selon l'une des revendications précédentes, comprenant :
l'établissement de la liaison de communication (207) vers l'entité de réseau (221, 222) du réseau de communication domestique (210) via la liaison de communication N1 entre l'UE (202) et l'entité AMF (251) du réseau de communication visité (240) et/ou via an N2 liaison de communication entre l'entité AMF (251) et l'entité RAN (252) du réseau de communication visité (240).

8. Procédé selon l'une des revendications précédentes, comprenant :
l'établissement d'une table de routage dans l'entité de réseau (300) du réseau de communication visité (240) pour l'acheminement de paquets de données de plan d'utilisateur en provenance de l'UE (202) vers l'entité de réseau (221, 222) du réseau de communication domestique (210) ou vers un autre réseau mobile terrestre public (PLMN).

9. Procédé selon l'une des revendications précédentes, comprenant :
l'acheminement par l'entité de réseau (300) du réseau de communication visité (240) de paquets de données de plan d'utilisateur en provenance de l'UE vers le réseau de communication domestique (210) ou vers un autre PLMN, via une fonction de plan d'utilisateur (UPF) du réseau de communication visité (240) et/ou via l'UPF et une fonction de gestion de session (SMF) du réseau de communication visité (240).

10. Entité de réseau (300) d'un réseau de communication visité (240) pour l'initialisation d'une liaison de communication d'itinérance avec un équipement d'utilisateur UE (202) dans le réseau de communication visité (240), ladite entité de réseau (300) comprenant :
une interface de communication (204) avec l'UE (202) ;
une interface de communication (206, 207) avec une entité de réseau (222, 221) d'un réseau de communication domestique (210) de l'UE (202) ; et
un processeur (301) prévu pour :
recevoir une demande d'enregistrement (203) de l'UE (202), ladite demande d'enregistrement comprenant un identifiant UE ID de l'UE ;
détecter sur la base de l'identifiant d'UE que la demande d'enregistrement (203) est relative à une communication d'itinérance avec l'UE ;
déterminer le réseau de communication domestique (210) de l'UE (202) ;
établir une liaison de communication (206, 207) vers l'entité de réseau (221, 222) du réseau de communication domestique (210) via une interface d'itinérance dédiée entre une entité de réseau d'accès radio RAN (252) du réseau de communication visité (240) et l'entité de réseau (221, 222) du réseau de communication domestique (210), la liaison de communication (206, 207) vers le réseau de communication domestique (210) étant établie avec une entité de fonction de gestion de session SMF (222) du réseau de communication domestique (210) via une entité de fonction de gestion d'accès et de mobilité AMF (221) du réseau de communication domestique (210) et via une liaison de communication N11 entre l'entité AMF (221) du réseau de communication domestique (210) et l'entité SMF (222) du réseau de communication domestique (210) ; et initialiser la liaison de communication d'itinérance avec l'UE (202) via la liaison de communication vers l'entité de réseau (221, 222) du réseau de communication domestique (210).

11. Entité de réseau (300, 252, 251) selon la revendication 10,
où le processeur (301) est prévu pour établir la liaison de communication (206, 207) vers l'entité de réseau (221, 222) du réseau de communication domestique (210) via une fonction de plan d'utilisateur du réseau de communication visité (240) et une fonction de plan d'utilisateur du réseau de communication domestique (210).
